(19) Europäisches Patentamt
European Patent Office
Office européen des brevets

(11) Publication number: 0 059 636
A1

(12) EUROPEAN PATENT APPLICATION

(21) Application number: 82301032.7

(22) Date of filing: 01.03.82

(51) Int. Cl.$^3$: G 01 N 27/56
G 01 N 1/22

(30) Priority: 02.03.81 US 239864

(43) Date of publication of application:
08.09.82 Bulletin 82/36

(84) Designated Contracting States:
DE FR GB IT

(71) Applicant: THE BABCOCK & WILCOX COMPANY
1010 Common Street P.O. Box 60035
New Orleans Louisiana 70160(US)

(72) Inventor: Ross, David F.
185 E. 280th Street
Euclid Ohio 44132(US)

(72) Inventor: Zukowski, Edwards Charles
7820 Pleasantview Trail
Mentor Ohio 44060(US)

(74) Representative: Cotter, Ivan John et al,
D. YOUNG & CO. 10 Staple Inn
London WC1V 7RD(GB)

(54) Apparatus for determining the presence of combustible constituents in a mixture.

(57) In a zirconia oxygen sensing apparatus, gas flows through inner (14) and outer tubes (12), one electrodes (18) is attached to the inner surface of the inner tube (14) and another electrode (16) is attached to the outer surface of the inner tube (14). The inner tube (14) is catalytic and the outer catalytic surface therefore is made inert so that an oxygen potential difference is produced between the electrodes (16, 18) which results in a voltage output, as read by an oxygen analyzer (42), which is proportional to the initial level of the combustible in the gas. The utilisation of inner (14) and outer (12) tubes wherein the portion of the gas sample contacting the active electrode (18) is maintained separate from the portion of the gas sample contacting the inactive electrode (16) prevents back or edge diffusion between the electrodes.

FIG. I

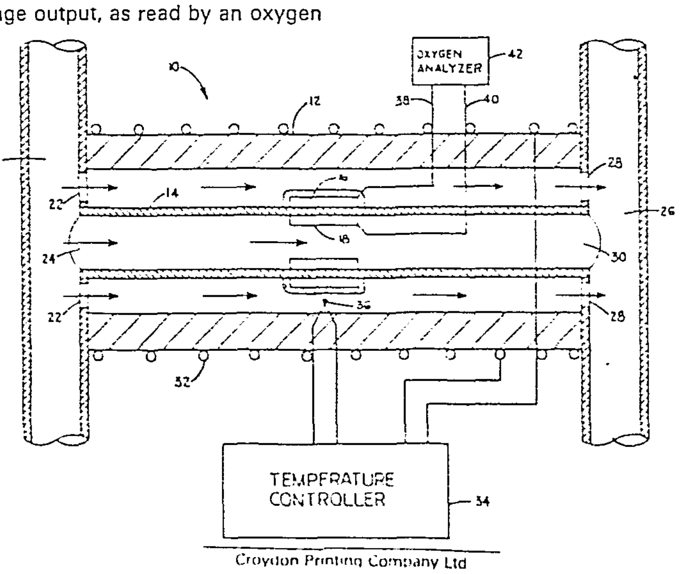


EP 0 059 636 A1

Croydon Printing Company Ltd

# APPARATUS FOR DETERMINING THE PRESENCE OF COMBUSTIBLE CONSTITUENTS IN A MIXTURE

The present invention relates to apparatus for determining the presence of predetermined combustible constituents in a mixture that contains oxygen.

Prior art devices for determining the presence of carbon monoxide and other combustibles utilise techniques such as infrared adsorption, chemiluminescence, surface adsorption cells and the like. While such methods are capable of determining the required levels of carbon monoxide and other combustibles, they tend to be expensive, can be susceptible to long term drift, and can be difficult to calibrate.

One known type of combustibles sensor, disclosed in U S Patent No. 4 005 001, supplies a gaseous mixture of oxygen and fuel to first and second electrodes on opposite surfaces of an oxygen ion conductive solid electrolyte cell in the form of a disc having the electrodes on opposite surfaces thereof. The electrodes are composed of different materials each exhibiting a different catalytic action on the gaseous mixture at a given temperature. The difference in oxygen potentials established at the respective electrodes as a result of the dissimilar catalytic action produces oxygen ion conductivity in the solid electrolyte cell which produces an electrical signal having a magnitude which is indicative of the combustible present in the mixture. It has been found that with this disc type of electrolyte, concentration gradients with very low flow rates will force diffusion of the reacted and unreacted gas to opposite electrode surfaces which can cause confusing results.

Because of the foregoing, it has now become desirable to develop a combustibles sensor having improved flow sensitivity and reproducibility.

According to the present invention there is provided apparatus for determining the presence of predetermined combustible constituents in an excess oxygen gas mixture, the apparatus comprising an oxygen ion conductive solid electrolyte cell including first and second electrodes disposed on opposite surfaces thereof, and means for conducting a sample of

the gas mixture simultaneously to the first and second electrodes, wherein the first electrode is such as to support a first rate of catalytic combustion reactivity between the oxygen and combustible constituents of the gas mixture and the second electrode is such as to support a second rate of catalytic combustion reactivity between the oxygen and combustible constituents of the gas mixture, the first rate is different from the second rate so as to produce an oxygen potential difference beween the first and second electrodes, and the solid electrolyte cell is operative to develop an output signal corresponding to the oxygen potential difference and indicative of the combustible constituents present in the gas mixture, characterised in that the solid electrolyte cell comprises a tube, the first electrode is attached to the outside surface of the tube, and the second electrode is attached to the inside surface of the tube.

A preferred embodiment of the present invention described hereinbelow is intended to solve or at least alleviate the aforementioned problems associated with the prior art by providing a combustibles sensor which has improved flow sensitivity and reproducibility. More specifically, the preferred embodiment comprises a modified zirconia oxygen sensor wherein gas flows through inner and outer tubes, and wherein one electrode is on the inner surface of the inner tube and the second electrode is on the outer surface of hte inner tube. An outer catalytic surface of the inner tube is made inert by means of a cement or other material which poisons its catalytic activity. Because of the tubular configuration, sample gas flow is split, so that gas flow exists on both sides of the inner tube, and there is no mixing of the reacted and unreacted gas. When no combustibles are present, the sensor output is near zero because there is equal oxygen concentration on both sides of the sensor. When operating at sufficient temperature to produce catalytic activity between the combustible gas and oxygen on the inside of the sensor, there is a resulting decrease of oxygen in the inner sample because oxygen is consumed in the reaction. For example, where CO is the combustible to be detected:

$$CO + \tfrac{1}{2}O_2 \longrightarrow CO_2$$

The $O_2$ differential between the inner and outer surfaces of the inner tube will produce a voltage proportional to the initial level of CO in the gas

mixture. By virtue of the tubular construction, once the reaction occurs at the active inner electrode the gas is physically constrained to remain separated from the outer surface of the inner tube. Accordingly, back diffusion or edge diffusion is essentially eliminated.

The invention will now be further described, by way of illustrative and non-limiting example, with reference to the accompanying drawing, in which:

Figure 1 is a schematic representation of apparatus embodying the present invention; and

Figure 2 is a graphical representation of sensor voltage output for various concentrations of oxygen in a carbon monoxide and oxygen mixture.

Figure 1 is a schematic representation of apparatus embodying the present invention and illustrates a combustibles sensor assembly 10 comprising an outer tube 12, an oxygen ion conductive solid electrolyte cell in the form of an inner tube 14, a first annular electrode 16 adhered to the outer diameter of the inner tube 14, and a second annular electrode 18 adhered to the inner diameter of the inner tube 14. In this preferred embodiment of the present invention, the electrodes 16 and 18 are electrically connected to a zirconia oxygen analyzer 42 of the type disclosed in U S Patent No. 3 960 500.

The outer tube 12 receives a sample of gas from a furnace stack 20 through a plurality of holes 22 formed in the side of the stack, while the inner tube 14 receives the sample through a central opening 24 formed in the stack, the gas sample then flowing through the tubes and being exhausted to an exhaust plenum 26 via holes 28 and 30 formed in the plenum.

The inner tube 14 is formed of a zirconia material, and the outer surface thereof is made inert by coating it with a cement or other material which poisons its catalytic activity. The electrodes 16 and 18 can be formed from platinum or some other noble metal.

A heating coil 32 surrounds the outer tube 12 and is operatively connected to a temperature controller 34 which effectively regulates the temperature of the sensor assembly 10 to a desired operating temperature, typically between $400^{0}C$ and $1000^{0}$, as monitored by a thermocouple unit 36. Electrical leads 38 and 40 connect the electrodes 16 and 18 to the oxygen analyzer 42.

By making the outer electrode 16 inert, the oxygen analyzer 42, as disclosed in U S Patent No. 3 960 500 previously noted, is converted into a combustibles sensor. Using the measurement of CO as an example, the $O_2$ differential between the inner and outer surfaces of the tube 14 produces a voltage output, as recorded by the oxygen analyzer 42, which is proportional to the initial level of CO in the gas mixture.

By using the configuration illustrated, wherein the gas sample is split and flows both inside and outside the zirconia cell defined by the inner tube 14, the gas which contacts the active inner electrode 18 is always maintained separate from the gas which contacts the inactive outer electrode 16, so that the back or edge diffusion present in prior art devices is essentially eliminated.

An example of the use of the zirconia oxygen analyzer 42 as part of the apparatus embodying the present invention is illustrated in Figure 2, in which the voltage output as determined by the oxygen analyzer 42 is plotted versus parts per million of CO in actual gas mixtures with various oxygen concentrations. While Figure 2 illustrates the sensing of carbon monoxide, it can be appreciated that the system can also be calibrated to sense other combustibles in fuel mixtures containing oxygen.

## CLAIMS

1. Apparatus for determining the presence of predetermined combustible constituents in an excess oxygen gas mixture, the apparatus comprising an oxygen ion conductive solid electrolyte cell including first and second electrodes (16, 18) disposed on opposite surfaces thereof, and means for conducting a sample of the gas mixture simultaneously to the first and second electrodes (16, 18), wherein the first electrode (16) is such as to support a first rate of catalytic combustion reactivity between the oxygen and combustible constituents of the gas mixture and the second electrode (18) is such as to support a second rate of catalytic combustion reactivity between the oxygen and combustible constituents of the gas mixture, the first rate is different from the second rate so as to produce an oxygen potential difference beween the first and second electrodes (16, 18), and the solid electrolyte cell is operative to develop an output signal corresponding to the oxygen potential difference and indicative of the combustible constituents present in the gas mixture, characterised in that the solid electrolyte cell comprises a tube (14), the first electrode (16) is attached to the outside surface of the tube (14), and the second electrode (18) is attached to the inside surface of the tube (14).

2. Apparatus according to claim 1, including a second tube (12) surrounding the first-mentioned tube (14), the apparatus being so constructed that, in use, a first portion of the gas mixture flows in the space defined between the first-mentioned and second tubes (12, 14) and in contact with the first electrode (16), and a second portion of the gas mixture flows through the first-mentioned tube (14) only and in contact with the second electrode (18).

3. Apparatus according to claim 2, including heating means (32) surrounding the second tube (12) and temperature control means (34) operatively connected to the heating means (32) for maintaining the temperature of the gas mixture in contact with the electrodes (16, 18) at a substantially constant predetermined temperature.

4. Apparatus according to claim 1, claim 2, or claim 3, wherein the tube (14) having the electrodes (16, 18) atached thereto is formed of a zirconia material, and the first and second electrodes (16, 18) are formed of platinum.

5. Apparatus according to any one of the preceding claims, wherein one of the first and second electrodes (16, 18) is coated with a material which poisons its catalytic combustion reactivity.

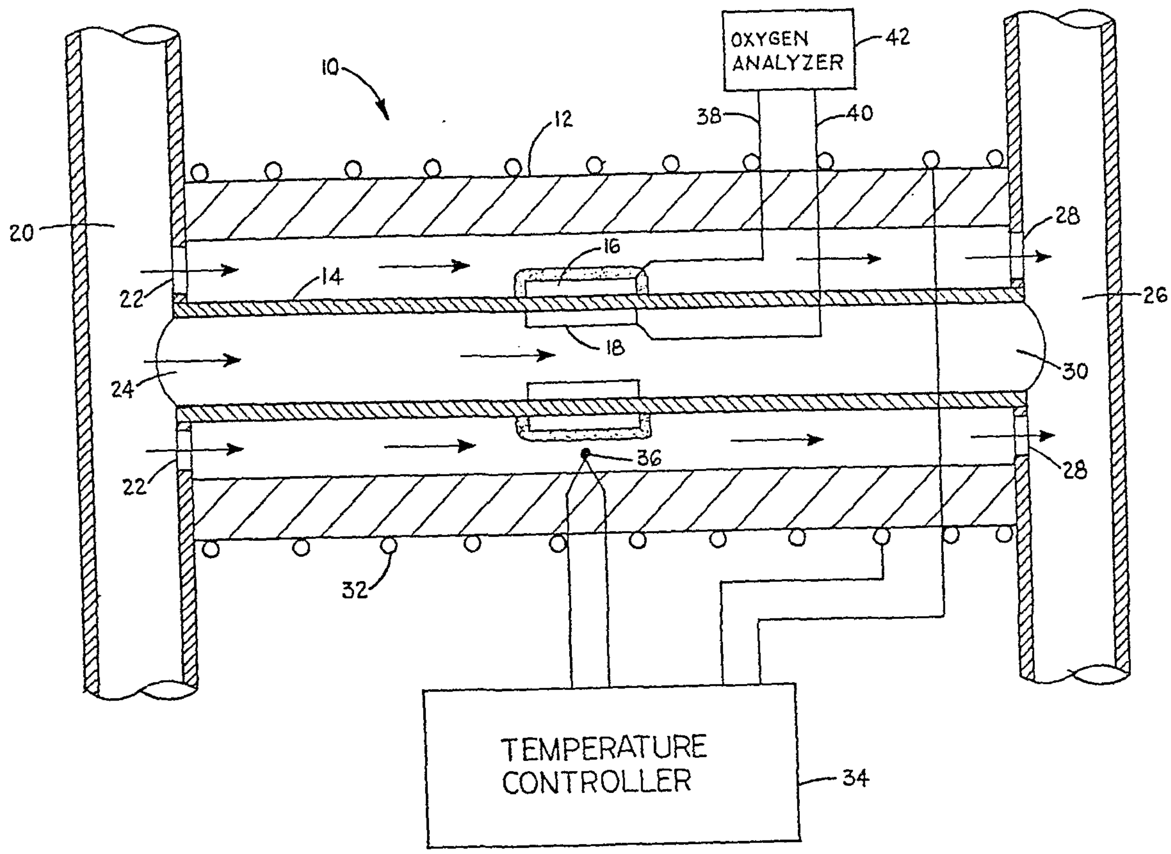
OXYGEN ANALYZER
42
10
12
38
40
20
28
16
14
22
26
18
24
30
22
36
28
32
TEMPERATURE CONTROLLER
34

FIG. 1

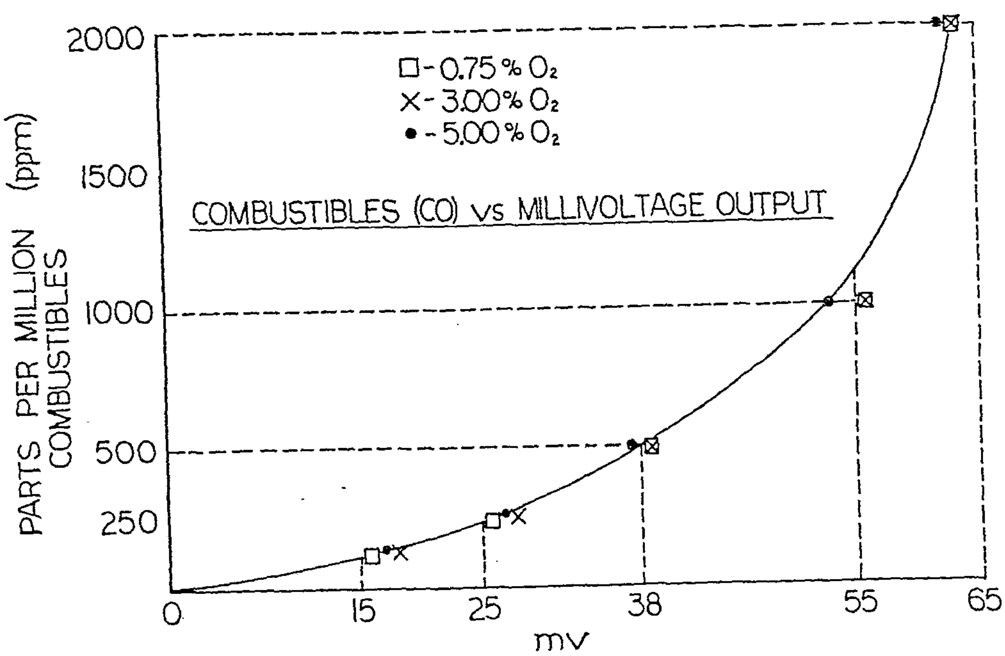
2000
1500
1000
500
250
PARTS PER MILLION COMBUSTIBLES (ppm)
□ - 0.75 % $O_2$
× - 3.00 % $O_2$
• - 5.00 % $O_2$
COMBUSTIBLES (CO) vs MILLIVOLTAGE OUTPUT
0
15
25
38
55
65
mv

FIG. 2

0059636

Application number

European Patent Office

# EUROPEAN SEARCH REPORT

EP 82 30 1032.7

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 616 274 (D.S. EDDY) * column 1, lines 10 to 16; column 2, lines 30 to 34; fig. 2 * -- | 1,3 | G 01 N 27/56<br>G 01 N 1/22 |
| Y | FR - A - 2 223 695 (N.V. PHILIPS' GLOEILAMPENFABRIEKEN) * claim 1; page 1, lines 1 to 17; page 2, lines 1 to 3, 10 to 13; page 4, lines 15 to 20, 27 to 37; fig. 1 * & US - A - 3 923 624 -- | 1-4 | TECHNICAL FIELDS SEARCHED (Int.Cl. 3)<br>G 01 N 1/00<br>G 01 N 25/00<br>G 01 N 27/00 |
| Y | DD - A - 105 892 (NAUCHNO-ISSLEDOVA-TELSKY INSTITUT METALLURGII) * claim 1; pages 5 to 7; fig. 1 * -- | 1,2,5 | |
| Y | FR - A - 2 051 855 (WESTINGHOUSE ELECTRIC CORP.) * claims 1, 2, 4 to 6; page 6, lines 9 to 17, 29 to 32; fig. 1 * & US - A - 3 981 785 -- | 3-5 | CATEGORY OF CITED DOCUMENTS<br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| D,A | US - A - 4 005 001 (A.R. PEBLER) * claims 1, 2; column 2, lines 25 to 68; column 3, lines 1 to 19; fig. 1 * -- | 1,3-5 | |
| D,A | GB - A - 1 486 098 (BAILEY METER CO.) * claims 1, 4, 9 to 12, 14; pages 1, 2, 3; fig. 1, 2 * ---- | 1,3,4 | |
| X | The present search report has been drawn up for all claims | | &: member of the same patent family, corresponding document |

| Place of search | Date of completion of the search | Examiner |
|---|---|---|
| Berlin | 28-05-1982 | DIETRICH |